Europäisches Patentamt

European Patent Office

Office européen des brevets

(19)

(11) **EP 0 484 227 B1**

(12) **FASCICULE DE BREVET EUROPEEN**

(45) Date de publication et mention
de la délivrance du brevet:
**07.02.1996 Bulletin 1996/06**

(51) Int Cl.6: **G02F 1/313**

(21) Numéro de dépôt: **91402895.6**

(22) Date de dépôt: **29.10.1991**

(54) **Séparateur de polarisations pour lumière guidée**

Polarisationsteiler für Wellenleiterlicht

Polarization splitter for waveguide light

(84) Etats contractants désignés:
**DE GB**

(30) Priorité: **31.10.1990 FR 9013529**

(43) Date de publication de la demande:
**06.05.1992 Bulletin 1992/19**

(73) Titulaire: **FRANCE TELECOM**
**F-92131 Issy les Moulineaux (FR)**

(72) Inventeur: **Rivière, Luc**
**F-06560 Valbonne (FR)**

(74) Mandataire: **Poulin, Gérard et al**
**F-75008 Paris (FR)**

(56) Documents cités:
**GB-A- 2 179 465**

- **ELECTRONICS LETTERS, vol. 23, no. 21,**
  **Octobre 1987, STEVENAGE, GB, pp 1145-1147;**
  **H. OKAYAMA ET AL.: 'Optically biased LiNbO3**
  **delta-beta reversal directional coupler switch'**
- **ELECTRONICS LETTERS, vol. 23, no. 12, Juin**
  **1987, STEVENAGE, GB, pp 614-616; H.**
  **HABARA: 'LiNbO3 directional coupler**
  **polarisation splitter'**

# Description

La présente invention concerne un séparateur de polarisations pour lumière guidée.

Elle trouve des applications en Optique Intégrée, par exemple dans le domaine des capteurs à fibres optiques ou dans le domaine de la transmission cohérente d'informations par fibres optiques monomodes, domaines dans lesquels l'état de polarisation des ondes optiques utilisées est un paramètre très important.

Dans ces domaines, les séparateurs de polarisations ("polarization beam splitters" selon la terminologie anglo-saxonne) sont des dispositifs essentiels qui permettent la séparation spatiale des modes transverse-électrique TE et transverse-magnétique TM des ondes optiques utilisées.

On connaît déjà divers séparateurs de polarisations pour lumière guidée, réalisés sur des matériaux uniaxes électro-optiques et en particulier sur $LiNbO_3$ : Ti.

Sur ce dernier matériau dont les axes cristallographiques sont classiquement notés X, Y et Z, les axes X et Y correspondant tous deux à l'indice de réfraction ordinaire du matériau tandis que l'axe Z correspond à l'indice de réfraction extraordinaire de ce matériau, on a déjà réalisé :

- des coupleurs directionnels dans des configurations de propagation suivant l'axe X ou suivant l'axe Y (voir le document (1) qui, comme les autres documents cités par la suite, est mentionné à la fin de la présente description),
- des dispositifs utilisant des techniques d'interférence à deux modes (voir le document (2)),
- des structures à embranchements en Y (voir le document (3)), et
- des séparateurs comportant des parties de guide d'onde à ions échangés (voir le document (4)).

On connaît également par le document (5) un coupleur directif à structure d'électrodes delta beta alternée qui est réalisé sur un substrat de niobate de lithium en coupe biréfringente et qui est utilisable en tant que séparateur de polarisations.

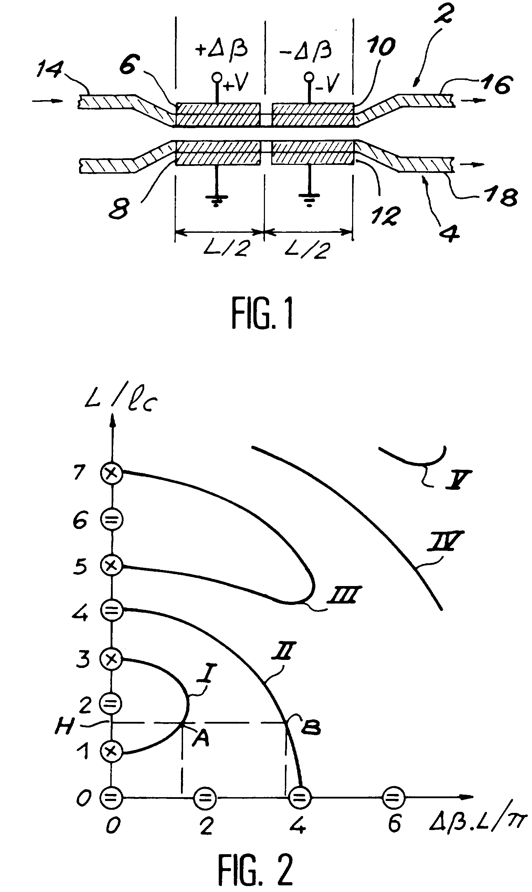

Ce coupleur directif, qui est schématiquement représenté sur la figure 1, comprend deux guides de lumière 2 et 4, de largeur constante, et deux sections voisines l'une de l'autre qui ont chacune une longueur L/2 où L représente la longueur d'interaction du coupleur.

Le guide de lumière 2 (repectivement 4) est muni d'une électrode de commande 6 (respectivement 8) dans l'une des deux sections et d'une électrode de commande 10 (respectivement 12) dans l'autre section.

Le diagramme de commande du coupleur de la figure 1 est partiellement représenté sur la figure 2.

On rappelle qu'un diagramme de commande d'un coupleur directif est tracé dans un repère sur l'axe des abscisses duquel on porte le paramètre

delta beta .L/pi

où : pi est le nombre bien connu qui vaut environ 3,1416,

L est la longueur d'interaction du coupleur, et

delta beta (noté avec les lettres grecques habituelles sur les figures) est la différence entre les constantes de propagation respectivement associées aux modes de propagation symétrique et antisymétrique du coupleur.

Sur l'axe des ordonnées du repère, on porte la quantité L/lc où lc représente la longueur de couplage du coupleur.

Le diagramme de commande représenté sur la figure 2 est un ensemble de courbes qui admettent l'axe des ordonnées comme axe de symétrie.

Les courbes I, III, V correspondent aux états croisés du coupleur, qui sont repérés par le signe x sur les axes du repère.

Les courbes II, IV (demi-cercles) correspondent aux états parallèles du coupleur, qui sont repérés par le signe = sur les axes du repère.

L'examen de la matrice des coefficients électrooptiques $r_{ij}$ du niobate de lithium montre que, pour un champ électrique donné appliqué suivant la direction de l'axe cristallographique Y, et une onde transverse se propageant parallèlement à l'axe X, les déphasages delta beta induits par effet électrooptique sur les modes guidés fondamentaux transverse électrique TE et transverse magnétique TM sont dans un rapport voisin de 3.

Considérons donc le coupleur de la figure 1 réalisé en structure delta-beta alternée sur un substrat de niobate de lithium dont la surface est perpendiculaire à l'axe cristallographique Y, l'onde guidée se propageant parallèlement à l'axe X.

Soit H le point représentatif de ce coupleur en l'absence de champ appliqué (voir la figure 2).

Ce point H est situé sur l'axe des ordonnées du diagramme de commande (delta beta = 0).

Si un champ électrique parallèle à l'axe Y est appliqué, le coupleur admet deux points représentatifs A et B, relatifs respectivement aux modes guidés TE et TM.

De la remarque faite plus haut, on tire :

HB = 3 HA

Si le point H et la valeur du champ appliqué sont choisis de telle sorte que le point A fasse partie de la courbe I, et que le point B fasse partie de la courbe II, respectivement lieux des états croisés et parallèles du coupleur, on obtiendra la séparation des ondes polarisées TE et TM : l'onde optique étant injectée à l'entrée 14 du guide 2 (figure 1), l'onde polarisée TM sera obtenue à l'extrémité 16 de ce guide 2, et l'onde polarisée TE sera obtenue à l'extrémité 18 du guide 4 (située du côté de l'extrémité 16).

Ce type de réalisation comporte deux inconvénients importants :

- le fonctionnement correct nécessite un choix très précis du point H, donc du rapport L/lc du coupleur : les tolérances technologiques de réalisation seront donc très serrées ;
- le raisonnement effectué plus haut suppose implicitement que les courbes I, II, ..., V du diagramme de commande sont les mêmes pour les polarisations TE et TM ; ceci n'est en général pas le cas, les longueurs de couplage lc étant différentes pour les ondes guidées TE et TM.

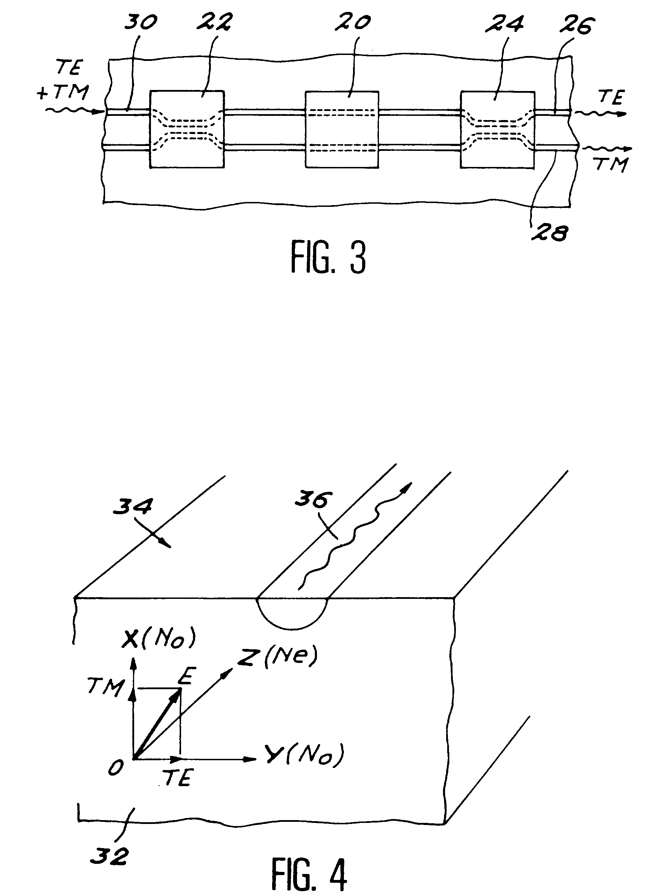

On connaît aussi par le document (6), un séparateur de polarisations qui est schématiquement représenté sur la figure 3.

Ce séparateur connu comprend un déphaseur 20 qui relie l'un à l'autre deux coupleurs directifs 3dB portant les références 22 et 24.

En polarisant convenablement ce séparateur connu, on peut obtenir respectivement aux deux sorties 26 et 28 du coupleur 24 les modes TE et TM d'une onde lumineuse d'entrée qui arrive à l'une 30 des deux entrées du coupleur 22.

Ce séparateur connu présente l'inconvénient de manquer de compacité, sa longueur étant de l'ordre de 2cm ou plus.

La présente invention a pour but de remédier aux inconvénients précédents en proposant un séparateur de polarisation qui est réalisable avec des électrodes de forme très simple (des électrodes en forme de bande par exemple) et qui peut être fabriqué de façon très compacte, avec une longueur inférieure à 5 mm.

On connaît par Electronics Letters, Vol.23, no.21, Octobre 1987, Stevenage GB, pages 1145-1147; H. Okayama et al: "Optically biased LiNbO3 delta-beta reversal directional coupler switch", un commutateur optique comportant un coupleur directif à structure d'électrodes delta beta alternée. Afin de réduire la tension de commande, une polarisation optique est introduite en alternant la largeur des guides d'onde optiques du coupleur dans les deux sections de celui-ci.

De façon précise, la présente invention a pour objet un séparateur de polarisations pour lumière guidée, ce séparateur comprenant un coupleur directif à structure d'électrodes delta beta alternée, ce coupleur comportant deux sections voisines l'une de l'autre et deux guides de lumière, une extrémité de L'un des deux guides étant destinée à recevoir une onde lumineuse d'entrée qui est une combinaison de deux modes optiques guidés, à savoir un mode transverse électrique TE et un mode transverse magnétique TM, séparateur caractérisé en ce que le coupleur est réalisé sur un substrat fait d'un matériau qui a un indice de réfraction associé au mode TE et un indice de réfraction associé au mode TM et qui permet d'induire des variations opposées respectivement sur ces indices de réfraction, et en ce que le coupleur est en outre apte à introduire, en l'absence de tension électrique entre les électrodes, une variation delta beta entre les constantes de propagation correspondant respectivement aux modes de propagation symétrique et antisymétrique du coupleur, variation qui, d'une part, est indépendante de l'état de polarisation de l'onde lumineuse guidée par le séparateur et, d'autre part, est telle que le point représentatif du coupleur, sur le diagramme de commande de ce dernier, soit le milieu d'un segment qui est parallèle à l'axe des abscisses du repère dans lequel est tracé le diagramme et qui est délimité par deux points appartenant respectivement à une courbe correspondant à des états croisés du coupleur et à une courbe correspondant à des états parallèles de ce coupleur, de sorte que, par une polarisation électrique appropriée de ce dernier, on obtient l'un des deux modes TE et TM de l'onde lumineuse d'entrée à l'autre extrémité du guide qui reçoit cette onde lumineuse d'entrée et l'autre mode à l'extrémité correspondante de l'autre guide.

Selon un mode de réalisation particulier du séparateur objet de l'invention, les largeurs respectives des guides subissent respectivement une augmentation et une diminution dans l'une des deux sections du coupleur et respectivement une diminution identique à la précédente et une augmentation identique à la précédente dans l'autre section, les augmentations et diminutions étant choisies de façon à obtenir ledit point représentatif du coupleur.

Le séparateur objet de la présente invention peut être muni de moyens de commande permettant de commuter les modes TM et TE respectivement obtenus aux extrémités correspondantes du coupleur.

Les variations des indices de réfraction respectivement associés au mode TE et au mode TM peuvent être induites par un effet électro-optique.

Selon un mode de réalisation particulier du séparateur objet de l'invention,

- le matériau du substrat est choisi parmi les matériaux appartenant au groupe de symétrie cristalline trigonal 3 m, le matériau du substrat étant ainsi un matériau uniaxe électro-optique ayant trois axes cristallographiques X, Y, Z perpendiculaires les uns aux autres, les axes X et Y correspondant tous deux à l'indice ordinaire No du matériau tandis que l'axe Z correspond à l'indice extraordinaire Ne de ce matériau,

- la face du substrat, sur laquelle est formé le séparateur, est perpendiculaire à l'un des axes X et Y et

- le séparateur est formé de telle façon que la lumière guidée se propage parallèlement à l'axe Z dans ce séparateur.

Dans le groupe mentionné ci-dessus, on peut choisir LiNbO$_3$.

On réalise alors le séparateur sur LiNbO$_3$ propagation Z, coupe X ou coupe Y ("X-cut or Y-cut, Z-propagating LiNbO$_3$" selon la terminologie anglo-saxonne) -voir le document (7).

Une telle configuration permet une réduction importante de la biréfringence modale et simplifie la conception des électrodes du séparateur, par rapport aux configurations en propagation X ou en propagation Y.

Dans ce cas, le coupleur peut être réalisé par diffusion locale de Ti, échange ionique ou implantation, dans LiNbO$_3$.

Dans ce cas également, le rapport de la longueur d'interaction L à la longueur de couplage lc du coupleur peut être supérieur ou égal à 1 et inférieur ou égal à 3.

La présente invention sera mieux comprise à la lecture de la description d'exemples de réalisation donnés ci-après à titre purement indicatif et nullement limitatif, en référence aux dessins annexés sur lesquels :

- la figure 1 est une vue schématique d'un séparateur de polarisations connu, qui utilise un coupleur directif de type delta beta alterné, et a déjà été décrite,
- la figure 2 représente une partie du diagramme de commande de ce coupleur et a déjà été décrite,
- la figure 3 est une vue schématique d'un autre séparateur de polarisations connu et a déjà été décrite,
- la figure 4 est une vue en coupe schématique d'un substrat qui est fait d'un matériau utilisable dans la présente invention,
- la figure 5 est une vue de dessus schématique d'un mode de réalisation particulier du séparateur de polarisations objet de la présente invention, qui comprend un coupleur directif de type delta beta alterné,
- la figure 6 représente une partie du diagramme de commande de ce coupleur,
- la figure 7 illustre schématiquement la possibilité de réaliser un séparateur conforme à l'invention sur un matériau du genre $LiNbO_3$ en coupe X, propagation Z,
- la figure 8 illustre schématiquement la possibilité de réaliser un séparateur conforme à l'invention sur un matériau du genre $LiNbO_3$ en coupe Y, propagation Z, et
- la figure 9 est une vue en coupe schématique d'un substrat qui est fait d'un autre matériau utilisable dans la présente invention.

La figure 4 est une vue en coupe schématique d'un substrat 32 fait d'un matériau uniaxe électro-optique sur lequel il est possible de réaliser un séparateur conforme à la présente invention.

Ce matériau a trois axes cristallographiques X, Y et Z.

Chacun de ces axes est perpendiculaire aux deux autres.

De plus, chacun des axes X et Y correspond à l'indice ordinaire No du matériau tandis que l'axe Z correspond à l'indice extraordinaire Ne de ce matériau.

La face 34 du substrat 32, sur laquelle le séparateur est réalisé, est perpendiculaire soit à l'axe X soit à l'axe Y.

Dans le cas de la figure 4, le séparateur est réalisé sur une face qui est perpendiculaire à l'axe X.

On voit sur cette figure 4 une partie 36 d'un guide d'onde que comporte le séparateur et qui est réalisé par diffusion localisée d'une matière appropriée, par échange ionique ou par implantation, dans le substrat 32.

Le champ électrique E d'une onde lumineuse qui arrive dans le séparateur est, de façon classique, considéré comme la somme de deux modes TE et TM perpendiculaires l'un à l'autre et perpendiculaires à la direction de propagation de l'onde lumineuse qui, dans le cas présent, est parallèle à l'axe Z.

De plus, on sait que le mode TE est parallèle à la face 34 du substrat tandis que le mode TM est perpendiculaire à cette face 34.

Donc, dans le cas où la face 34 est perpendiculaire à l'axe X (cas de la figure 4), le mode TE est compté sur l'axe Y et le mode TM est compté sur L'axe X.

Bien entendu, au cas où la face du substrat sur laquelle est réalisé le séparateur serait perpendiculaire à l'axe Y, le mode TE serait compté sur l'axe X et le mode TM serait compté sur l'axe Y.

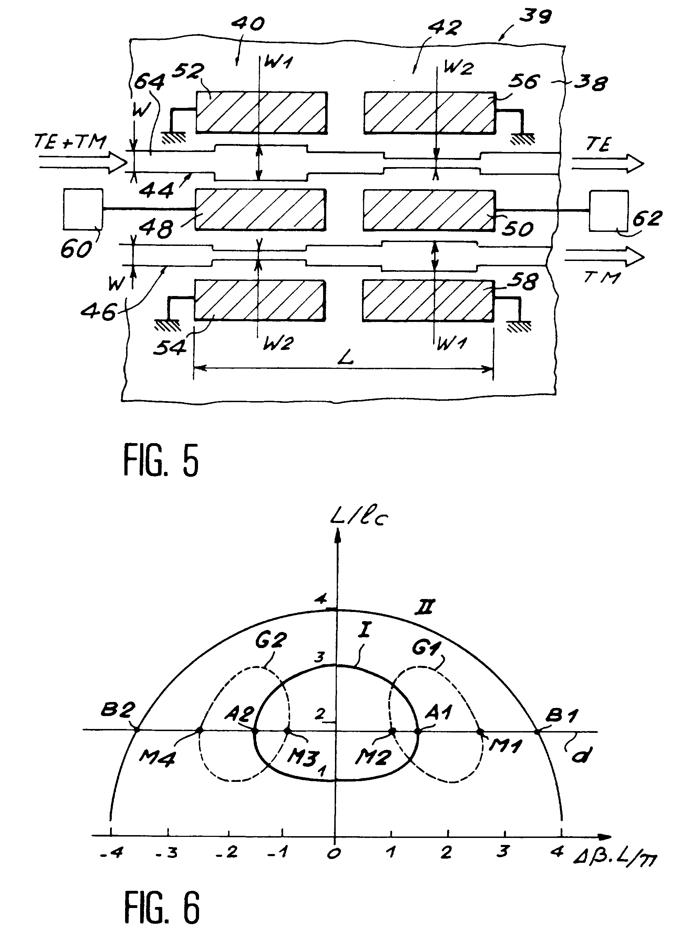

Sur la figure 5, on a représenté schématiquement et en vue de dessus une mode de réalisation particulier du séparateur objet de l'invention.

Le séparateur conforme à l'invention, qui est schématiquement représenté sur la figure 5, est réalisé sur un substrat 38 en $LiNbO_3$ coupe X, propagation Z et comprend un coupleur directif à structure delta beta alternée.

Ce coupleur comporte, de façon classique, deux sections adjacentes 40 et 42 et deux guides de lumière 44 et 46 sensiblement parallèles qui traversent successivement les deux sections et qui sont suffisamment proches l'un de l'autre pour permettre un couplage optique mutuel.

Le coupleur de la figure 5 est muni d'électrodes dont la polarisation permet d'appliquer aux deux guides, dans chaque section, des champs électriques opposés l'un à l'autre et tels que, pour chaque guide, les champs qui lui sont respectivement appliqués dans les deux sections soient opposés l'un à l'autre.

Dans l'exemple représenté sur la figure 5, la section 40 (respectivement 42) comporte une électrode 48 (respectivement 50) comprise entre les guides 44 et 46 et deux électrodes 52 et 54 (respectivement 56 et 58) qui sont situées de part et d'autre de l'ensemble des deux guides.

En vue de dessus, les électrodes 52 et 56 forment de simples bandes alignées ; il en est de même pour les électrodes 48 et 50 et pour les électrodes 54 et 58.

Des moyens de commande 60 et 62 sont prévus pour porter les électrodes 48 et 50 respectivement à des potentiels électriques opposés +V et -V, les autres électrodes 52, 54, 56 et 58 étant mises à la masse.

Dans une variante non représentée, des moyens de commande sont prévus pour porter les électrodes 52 et 54 à un potentiel électrique -V et les électrodes 56 et 58 à un potentiel électrique opposé +V, les électrodes 48 et 50 étant alors mises à la masse.

Par ailleurs, deux électrodes alignées qui doivent être mises à la masse peuvent bien entendu être remplacées par une seule électrode mise à la masse et occupant la surface occupée par ces deux électrodes ainsi que l'espace compris entre ces dernières.

Sur la figure 6, on voit le diagramme de commande du coupleur de la figure 5, diagramme dans lequel les états croisés du coupleur forment un ensemble de courbes fermées, telles que I, admettant l'axe des ordonnées comme axe de symétrie.

Les états parallèles du coupleur forment des demi-cercles tels que II.

Le coupleur delta beta alterné de la figure 5 se distingue des coupleurs delta beta alternés connus notamment par le fait que les guides 44 et 46 n'ont pas une largeur W constante.

Pour l'un des guides, cette largeur est augmentée dans une première section et diminuée dans la deuxième section tandis que la largeur de l'autre guide est diminuée dans la première section et augmentée dans la deuxième section, les diminutions étant identiques et les augmentations étant aussi identiques.

Ainsi voit-on sur la figure 5 que la largeur du guide 44 (respectivement 46) prend une valeur W1 supérieure à W (respectivement une valeur W2 inférieure à W) dans la section 40 et la valeur W2 (respectivement W1) dans la section 42.

Ces modifications de largeur, que l'on obtient à l'aide de masques appropriés lors de la fabrication du coupleur, font que le coupleur de la figure 5 présente une "pré-polarisation passive" : en l'absence de tension électrique appliquée entre les électrodes, le point représentatif du coupleur, sur le diagramme de la figure 6, n'est pas situé sur l'axe des ordonnées (où delta beta est nul), contrairement à ce que l'on obtiendrait si les guides 44 et 46 avaient une largeur W constante.

Supposons que ce point représentatif soit situé en M1, dans le premier quadrant du repère de la figure 6, sur un segment parallèle à l'axe des abscisses et délimité par des points A1 et B1 appartenant respectivement aux courbes I (états-croisés) et II (états parallèles).

L'application, au coupleur, des tensions +V et -V mentionnées plus haut provoque un déplacement du point représentatif du coupleur parallèlement à l'axe des abscisses du repère, sur la droite d qui passe par les points A1 et B1.

On peut ainsi atteindre un état parallèle ou un état croisé pour l'un des modes TE et TM d'une onde lumineuse envoyée dans l'un des guides, par une extrémité de celui-ci.

Par exemple, on peut atteindre un état croisé (point A1) pour le mode TE.

Or l'application d'un champ électrique au séparateur à propagation Z ("Z-propagating splitter") de la figure 5 se traduit, pour les modes TE et TM, par des variations delta beta (TE) et delta beta (TM) opposées.

Dans l'exemple ci-dessus, le point représentatif B1 du mode TM sera donc un point symétrique du point A1 par rapport au point M1.

Si le point A1 est situé sur la courbe I (lieu des états croisés), il est nécessaire, pour obtenir une séparation spatiale des ondes polarisées TE et TM, que B1 soit situé sur la courbe II (lieu des états parallèles).

Ceci ne peut être réalisé que si le point M1 est le milieu du segment A1B1.

On réalise donc la séparation des modes TE et TM.

A titre d'exemple, si l'onde lumineuse (TE+TM) est envoyée dans le guide 44 par l'extrémité 64 de celui-ci, située du côté de la section 40, il est possible d'obtenir, par polarisation électrique convenable du coupleur, le mode TE à l'autre extrémité du guide 44 et le mode TM à l'extrémité du guide 46, située du côté de la section 42.

On indique à ce propos que l'onde lumineuse peut provenir d'une fibre optique non représentée et être injectée dans l'extrémité 64 du guide 44 par l'intermédiaire d'une optique appropriée, ou provenir d'un guide d'onde non représenté qui est réalisé sur la même face du substrat que le séparateur et qui est prolongé par le guide 44.

En revenant au diagramme de la figure 6, on remarque que l'ensemble des points situés à mi-distance des courbes I et II et vérifiant la condition

$$1 \leq L/lc \leq 3 \qquad (1)$$

est constitué de deux courbes fermées G1 et G2, symétriques l'une de l'autre par rapport à l'axe des ordonnées.

Chaque point de ces courbes G1 et G2 est un point de pré-polarisation passive.

Pour un rapport L/lc donné, qui vérifie la condition (1), il existe en général quatre points de pré-polarisation du coupleur, permettant d'obtenir la séparation des modes (ou séparation des polarisations).

Par exemple, pour le rapport L/lc qui correspond à la droite d, on a quatre points M1, M2, M3 M4 comme on le voit sur la figure 6 et l'on peut écrire :

$$M1A1 = M1B1, \quad M2A2 = M2B1$$
$$M3A1 = M3B2 \text{ et } M4A2 = M4B2.$$

On choisit de préférence l'un des points M1 et M4 en tant que point de pré-polarisation car ces points M1 et M4 nécessitent une excursion en delta beta, et donc des tensions appliquées au coupleur, inférieures en valeur absolue à celles que nécessitent les points M2 et M3.

On remarquera également que d'autres points de pré-polarisation sont possibles du fait que le diagramme de la figure 6 comporte d'autres courbes (non représentées) correspondant aux états parallèles pour les unes et aux états croisés pour les autres (cf. figure 2).

De façon générale, les points de pré-polarisation sont situés dans les domaines définis par la condition :

$$4k + 1 \leq L/lc \leq 4k + 3$$

où k est un nombre entier positif ou nul.

Cependant il n'est généralement pas avantageux de travailler avec un rapport L/lc important.

C'est pourquoi on choisit de préférence les points de pré-polarisation dans le domaine correspondant à k égal à 0.

Pour réaliser un séparateur de polarisation du genre de celui qui a été décrit en se référant à la figure 5, on dispose du diagramme de commande à partir duquel on peut tracer les courbes de pré-polarisation telles que G1 et G2.

On choisit le rapport L/lc d'où un point de pré-polarisation, M1 par exemple.

On en déduit la pré-polarisation passive delta beta à réaliser, après avoir choisi L.

Cette pré-polarisation passive peut être reliée empiriquement ou par modélisation aux largeurs W1 et W2 des guides et à leurs profils d'indice respectifs.

On voit donc qu'on peut déterminer les divers paramètres du séparateur.

On notera que le séparateur objet de l'invention est susceptible de fonctionner en tant que commutateur de polarisations.

En prenant l'exemple du séparateur de la figure 5, il suffit, pour ce faire, de prévoir des moyens 60 et 62 capables d'inverser les tensions qu'ils appliquent respectivement aux électrodes 48 et 50, d'où la possibilité de commuter les polarisations TE et TM entre les deux extrémités de sortie du coupleur de la figure 5.

D'autres matériaux que $LiNbO_3$ sont utilisables dans la présente invention, par exemple le matériau $LiTaO_3$ en coupe X, propagation Z.

Par ailleurs, dans la présente invention, au lieu d'utiliser un matériau du type $LiNbO_3$ ou $LiTaO_3$ en coupe X, propagation Z, on peut utiliser ce matériau en coupe Y, propagation Z.

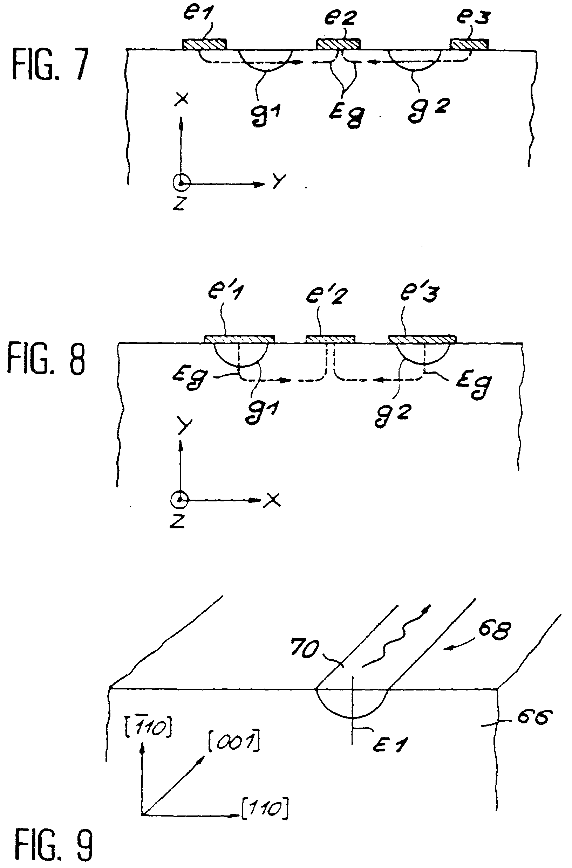

Dans les deux cas, il faut que le champ électrique Eg appliqué aux guides g1, g2 du séparateur réalisé sur ce matériau (figures 7 et 8) soit dirigé suivant l'axe Y.

Dans le cas d'une coupe X, les électrodes du séparateur, telles que les électrodes e1, e2, e3 (figure 7), doivent donc permettre d'appliquer un champ électrique parallèle à la surface du matériau, sur laquelle est réalisé le séparateur.

On voit sur la figure 7 que ces électrodes e1, e2, e3 peuvent être disposées à la surface du matériau et de part et d'autre des guides g1, g2.

Dans le cas d'une coupe Y, les électrodes du séparateur, telles que les électrodes e'1, e'2, e'3 (figure 8), doivent permettre d'appliquer un champ électrique Eg qui est perpendiculaire à la surface du matériau, sur laquelle est réalisé le séparateur.

On voit sur la figure 8 que ces électrodes e'1, e'2, e'3 peuvent être disposées à la surface du matériau, les électrodes e'1 et e'3 étant sur les guides g1 et g2 et l'électrode e'2 étant entre ces guides.

Enfin, dans la présente invention, d'autres matériaux que ceux qui appartiennent à la famille de $LiNbO_3$ sont utilisables.

On peut réaliser un séparateur conforme à l'invention sur un substrat fait de tout matériau qui permet d'induire des variations opposées DN et -CN respectivement sur l'indice de réfraction associé au mode TE et sur l'indice de réfraction associé au mode TM (ces modes TE et TM correspondant à l'onde lumineuse qui arrive à l'entrée du séparateur).

Ainsi peut-on utiliser l'arséniure de Gallium GaAs qui est un semiconducteur faisant partie du groupe de symétrie cristalline $\bar{4}$ 3 m cubique.

A titre d'exemple :

- on utilise un substrat 66 (figure 9) en GaAs,

- la face 68 de ce substrat, sur laquelle est réalisé le séparateur dont on voit une partie 70 sur la figure 9, est perpendiculaire à l'axe cristallographique I$\bar{1}$ 10I,

- chaque champ électrique E1 nécessaire au fonctionnement du séparateur est appliqué suivant l'axe I$\bar{1}$ 10I, donc perpendiculairement au substrat,

- la direction de propagation de la lumière guidée est parallèle à l'axe I001I.

Dans ces conditions, le mode TM est polarisé suivant l'axe I$\bar{1}$ 10I et le mode TE est polarisé suivant l'axe I110I.

Dans cet exemple, les indices de réfraction $N_{TE}$ et $N_{TM}$ qui sont respectivement associés aux modes TE et TM, ont pour expressions :

$$N_{TE} = n_0 - 1/2.n_0^3.r_{41}.IE1I$$

$$N_{TM} = n_0 + 1/2.n_0^3.r_{41}.IE1I$$

où IE1I représente le module de E1,
$r_{41}$ représente le seul coefficient non nul du tenseur électro-optique de GaAs et
$n_0$ représente la valeur commune à $N_{TE}$ et $N_{TM}$ en l'absence de champ E1.

On constate que les variations de $N_{TE}$ et $N_{TM}$, induites par effet électro-optique, sont opposées.

## DOCUMENTS CITES

(1) GRANESTRAND, THYLEN, STOLTZ, Electron. Lett., 24, n°18, 1142 (1988), "Polarisation independent switch and polarisation splitter employing delta beta and delta kappa modulation"

(2) PAPUCHON, ROY, OSTROWSKY, Appl. Phys. Lett., 31, 266 (1977), "Electrically active optical bifurcation : BOA"

(3) FINAK, YIP, Opt. Quant. El., 17, 15 (1985)

(4) FUJII, HIDAKA, Proc. 4th IOOC, TOKYO, (1983) 29A1-4, "$LiNbO_3$ optical waveguide fabricated by the ion-exchange technique and its application to TE/TM mode splitter"

(5) K. HABARA, Electron. Lett., vol.23, n°12, 4 juin 1987, p.614, "Lithium niobate directional coupler polarisation splitter".

(6) CHUNG, CHIANG, Optics and Lasers Technology, avril 1983, p.83 à 90

(7) BOURBIN, ENARD, WERNER, VATOUX, PAPUCHON, 5th International Conference on Integrated Optics, ECIO'89, "A polarisation splitter in integrated optics".

**Revendications**

1. Séparateur de polarisations pour lumière guidée, ce séparateur comprenant un coupleur directif (39) à structure d'électrodes delta beta alternée, ce coupleur comportant deux sections (40, 42) voisines l'une de l'autre et deux guides de lumière (44, 46), une extrémité (64) de l'un (44) des deux guides étant destinée à recevoir une onde lumineuse d'entrée qui est une combinaison de deux modes optiques guidés, à savoir un mode transverse électrique TE et un mode transverse magnétique TM, séparateur caractérisé en ce que le coupleur est réalisé sur un substrat (38) fait d'un matériau qui a un indice de réfraction associé au mode TE et un indice de réfraction associé au mode TM et qui permet d'induire des variations opposées respectivement sur ces indices de réfraction, et en ce que le coupleur est en outre apte à introduire, en l'absence de tension électrique entre les électrodes, une variation delta beta entre les constantes de propagation correspondant respectivement aux modes de propagation symétrique et antisymétrique du coupleur, variation qui, d'une part, est indépendante de l'état de polarisation de l'onde lumineuse guidée par le séparateur et, d'autre part, est telle que le point représentatif du coupleur (M1; M2; M3; M4), sur le diagramme de commande de ce dernier, soit le milieu d'un segment qui est parallèle à l'axe des abscisses du repère dans lequel est tracé le diagramme et qui est délimité par deux points (A1, B1; A2, B1; A1, B2; A2, B2) appartenant respectivement à une courbe (I) correspondant à des états croisés du coupleur et à une courbe (II) correspondant à des états parallèles de ce coupleur, de sorte que, par une polarisation électrique appropriée de ce dernier, on obtient l'un des deux modes TE et TM de l'onde lumineuse d'entrée à l'autre extrémité du guide (44) qui reçoit cette onde lumineuse d'entrée et l'autre mode à l'extrémité correspondante de l'autre guide.

2. Séparateur selon la revendication 1, caractérisé en ce que les largeurs respectives des guides (44, 46) subissent respectivement une augmentation et une diminution dans l'une (40) des deux sections du coupleur et respectivement une diminution identique à la précédente et une augmentation identique à la précédente dans l'autre section (42), les augmentations et diminutions étant choisies de façon à obtenir ledit point représentatif du coupleur.

3. Séparateur selon l'une quelconque des revendications 1 et 2, caractérisé en ce qu'il est muni de moyens de commande (60, 62) permettant de commuter les modes TM et TE respectivement obtenus aux extrémités correspondantes du coupleur.

4. Séparateur selon l'une quelconque des revendications 1 à 3, caractérisé en ce que les variations des indices de réfraction sont induites par un effet électro-optique.

5. Séparateur selon la revendication 4, caractérisé en ce que le matériau du substrat (38) est choisi parmi les matériaux appartenant au groupe de symétrie cristalline trigonal 3 m, le matériau du substrat étant ainsi un matériau uniaxe électro-optique ayant trois axes cristallographiques X, Y, Z perpendiculaires les uns aux autres, les axes X et Y correspondant tous deux à l'indice ordinaire No du matériau tandis que l'axe Z correspond à l'indice extraordinaire Ne de ce matériau, en ce que la face du substrat, sur laquelle est formé le séparateur, est perpendiculaire à l'un des axes X et Y et en ce que le séparateur est formé de telle façon que la lumière guidée se propage parallèlement à l'axe Z dans ce séparateur.

6. Séparateur selon la revendication 5, caractérisé en ce que le matériau du substrat (38) est $LiNbO_3$.

7. Séparateur selon la revendication 6, caractérisé en ce que le coupleur (39) est réalisé par diffusion locale de Ti, échange ionique ou implantation, dans $LiNbO_3$.

8. Séparateur selon l'une quelconque des revendications 6 et 7, caractérisé en ce que le rapport de la longueur d'interaction L à la longueur de couplage lc du coupleur (39) est supérieur ou égal à 1 et inférieur ou égal à 3.

**Patentansprüche**

1. Polarisationsteiler für Wellenleiterlicht, wobei der Teiler einen Richtungskoppler (39) eines alternierenden Delta-Beta-Elektrodenaufbaus umfaßt, wobei dieser Koppler zwei einander benachbarte Abschnitte (40,42) und zwei Lichtleiter (44,46) umfaßt, wobei ein Ende (64) von einem (44) der zwei Leiter vorgesehen ist, eine Eingangslichtwelle aufzunehmen, die eine Kombination von zwei geleiteten optischen Moden ist, nämlich einer transversalen elektrischen Mode TE und einer transversalen magnetischen Mode TM, wobei der Teiler dadurch **gekennzeichnet ist, daß** der Koppler ausgeführt ist auf einem Substrat (38), das aus einem Material gefertigt ist, das einen Brechungsindex in Verbindung mit der TE-Mode und einen Brechungsindex in Verbindung mit der TM-Mode aufweist und das die Einführen von entgegengesetzten Variationen der jeweiligen Brechungsindizes erlaubt, und daß der Koppler zudem geeignet ist, bei Abwesenheit einer elektrischen Spannung zwischen den Elektroden eine Delta-Beta-Variation zwischen den Ausbreitungskonstanten entsprechend den jeweiligen symmetrischen und antisymmetrischen Ausbreitungsmoden des Kopplers einzuführen, wobei die Variationen einerseits unabhängig vom Polarisationszustand des Wellenleiterlichtes durch den Teiler sind, und andererseits derart sind, daß der Punkt (M1;M2;M3;M4), der den Koppler auf dem Steuerdiagramm des letzteren wiedergibt, die Mitte eines Segmentes ist, welches parallel zur Achse der Abszissenmarkierung ist, auf welcher das Diagramm gezeichnet ist und die durch zwei Punkte (A1, B1; A2, B1; A1, B2; A2, B2) begrenzt ist, welche jeweils zu einer Kurve (I) gehören, die dem gekreuzten Zustand des Kopplers entspricht und einer Kurve (II) entsprechend den parallelen Zuständen des Kopplers in der Weise, daß durch geeignete elektrische Polarisation des letzteren man eine der zwei Moden TE und TM der Eingangslichtwelle am anderen Ende des Leiters (44), der die Eingangslichtwelle aufnimmt, und den anderen Mode am anderen Ende entsprechend dem anderen Leiter erhält.

2. Polarisationsteiler nach Anspruch 1, **dadurch gekennzeichnet, daß** die jeweiligen Längen der Leiter (44, 46) jeweils einer Erhöhung und einer Verminderung in einem (40) der zwei Kopplerabschnitte und jeweils einer identischen Verminderung zu der vorhergehenden und einer identischen Erhöhung zu der vorhergehenden in dem anderen Abschnitt (42) unterliegen, wobei die Erhöhungen und die Verminderungen in der Weise gewählt sind, daß man den Wiedergabepunkt des Kopplers erhält.

3. Polarisationsteiler nach einem der Ansprüche 1 und 2, **dadurch gekennzeichnet, daß** er mit einer Steuereinrichtung (60,62) versehen ist, die eine Umschaltung der Moden TM beziehungsweise TE erlaubt, welcher an den entsprechenden Enden des Kopplers erhalten werden.

4. Polarisationsteiler nach einem der Ansprüche 1 bis 3, **dadurch gekennzeichnet, daß** die Variationen der Brechungsindizes durch einen elektro-optischen Effekt induziert werden.

5. Polarisationsteiler nach Anspruch 4, **dadurch gekennzeichnet, daß** das Material des Substrates (38) gewählt wird unter den Materialien, die zu der Gruppe mit trigonaler Kristallsymmetrie 3 m gehört, wobei das Material des Substrates ein uni-axiales, elektro-optisches Material ist, das drei kristallographische Achsen X, Y, Z aufweist, die senkrecht aufeinanderstehen, wobei die Achsen X und Y bei dem ordentlichen Index $N_o$ des Materials entsprechen, wohingegen die Achse Z dem außerordentlichen Index $N_e$ dieses Materials entspricht, daß die Fläche des Substrats, auf welcher der Teiler gebildet ist, senkrecht zu einer der Achsen X und Y liegt und daß der Teiler in der Weise gebildet ist, daß das Wellenleiterlicht sich parallel zur Achse Z in dem Teiler ausbreitet.

6. Polarisationsteiler nach Anspruch 5, **dadurch gekennzeichnet, daß** das Material des Substrates (38) $LiNbO_3$ ist.

7. Polarisationsteiler nach Anspruch 6, **dadurch gekennzeichnet, daß** der Koppler (39) ausgeführt wird durch lokale Diffusion von Ti, Ionenaustausch oder durch Implantation in $LiNbO_3$.

8. Polarisationsteiler nach einem der-Ansprüche 6 und 7, **dadurch gekennzeichnet, daß** das Verhältnis der Wechselwirkungslänge L zur Kopplungslänge Lc des Kopplers (39) größer oder gleich 1 und kleiner oder gleich 3 ist.

**Claims**

1. Polarization beam splitter for guided light, which comprises a directional coupler (39) having an alternating delta beta electrode structure, said coupler incorporating two sections (40, 42) adjacent to one another and two light guides (44, 46), one end (64) of one (44) of the two guides serving to receive an input lightwave, which is a combination of the two optical guided modes, namely a transverse-electrical mode TE and a transverse-magnetic mode TM, characterized in that the coupler is produced on a substrate (38) made from a material having a refractive index associated wit the TE mode and a refractive index associated with the TM mode and which makes it possible to induce opposite variations respectively on the refractive indexes and in that the coupler is able to introduce, in the absence of a voltage between the electrodes, a delta beta variation between the propagation constants respectively corresponding to the symmetrical and anti-symmetrical propagation modes of the coupler, which is on the one hand independent of the polarization state of the lightwave guided by the splitter and on the other is such that the representative point of the coupler (M1, M2, M3, M4) on its control diagram is the centre of a segment parallel to the abscissa axis of the reference frame in which the diagram is plotted and which is defined by two points (A1, B1; A2, B1; A1, B2; A2, B2) respectively belonging to a curve (I) corresponding to crossed states of the coupler and to a curve (II) corresponding to parallel states of said coupler, so that for an appropriate electrical polarization of the latter, one of the two TE and TM modes of the input lightwave is obtained at the other end of the guide (44), which receives said input lightwave and the other mode at the corresponding end of the other guide.

2. Splitter according to claim 1, characterized in that the respective widths of the guides (44, 46) respectively undergo an increase and a decrease in one (40) of the two sections of the coupler and respectively a decrease identical to the precedent and an increase identical to the precedent in the other section (42), the increases and decreases being chosen so as to obtain said representative point of the coupler.

3. Splitter according to either of the claims and 2, characterized in that it is provided with control means (60, 62) making it possible to switch the TM and TE modes respectively obtained at the corresponding ends of the coupler.

4. Splitter according to any one of the claims 1 to 3, characterized in that the refractive index variations are induced by an electrooptical effect.

5. Splitter according to claim 4, characterized in that the material of the substrate (38) is chosen from among the materials belonging to the 3m trigonal crystal symmetry group, the material of the substrate thus being a uniaxial electrooptical material having three crystal axes X, Y and Z perpendicular to one another, the X and Y axes corresponding to the ordinary index No of the material, whilst the Z axis corresponds to the extradordinary index Ne of said material, the face of the substrate on which the splitter is formed is perpendicular to one of the X and Y axes and the splitter is formed in such a way that the guided light propagates parallel to the Z axis in said splitter.

6. Splitter according to claim 5, characterized in that the material of the substrate (38) is LiNbO.

7. Splitter according to claim 6, characterized in that the coupler (39) is produced by local diffusion of Ti, ion exchange or implantation in LiNbO .

8. Splitter according to either of the claims 6 and 7, characterized in that the ratio of the interaction length L to the coupling length 1c of the coupler (39) is equal to or greater than 1 and equal to or lower than 3.

FIG. 1

FIG. 2

FIG. 3

FIG. 4

FIG. 5

FIG. 6

FIG. 7

FIG. 8

FIG. 9